# EUROPÄISCHE PATENTSCHRIFT

(11) **EP 0 850 715 B1**
(45) Veröffentlichungstag und Bekanntmachung des Hinweises auf die Patenterteilung: **09.02.2005**
(21) Anmeldenummer: 97121100.8
(22) Anmeldetag: 01.12.1997
(51) Int. Cl.: B23C 5/20

(54) **Wendeschneidwerkzeug**
Tool with cutting-insert
Outil avec plaquette de coupe

(30) Priorität: 31.12.1996 DE 19654815
(43) Veröffentlichungstag der Anmeldung: 01.07.1998
(73) Patentinhaber: Gebr. Heller Maschinenfabrik GmbH, D-72622 Nürtingen (DE)
(72) Erfinder:
(74) Vertreter: Jackisch-Kohl, Anna-Katharina

(56) Entgegenhaltungen:
- EP-A- 0 058 972
- EP-A- 0 439 317
- WO-A-96/39269
- FR-A- 1 573 357
- US-A- 4 169 690
- US-A- 4 602 897

## Beschreibung

Die Erfindung betrifft ein Wendeschneidwerkzeug nach dem Oberbegriff des Anspruches 1 (siehe US-A-4 602 897).

Solche Wendeschneidwerkzeuge sind beispielsweise Wendeschneidplatten, die auf einen Werkzeuggrundkörper geschraubt sind. Beispielsweise bei der Rundfräsbearbeitung von Formeinstichen an rotationssymmetrischen Werkstücken sind die Schneiden mit entsprechend angearbeiteten oder gepreßten Freiwinkel erforderlich, um eine optimale Zerspanung mit der Schneide zu ermöglichen. Diese Schneidengeometrie ergibt bei Anordnung an einer mehrschneidigen Wendeschneidplatte das Problem, daß nur eine geringe Zahl von Schneiden pro Wendeschneidplatte vorgesehen werden kann oder daß die Wendeschneidplatte aufgrund aufwendiger Herstellungsprozesse sehr teuer wird.

Es ist ein Wendeschneidwerkzeug bekannt (US-A-4 602 897), bei dem an den Schmalseiten eines quaderförmigen Halteelementes jeweils ein Schneidkörperteil befestigt ist. Jeder Schneidkörperteil weist an seinen Flanken jeweils eine Schneide auf, wobei benachbarte Schneiden der Schneidkörperteile durch eine Umfangsfläche miteinander verbunden sind, die auf einem gedachten Kreis liegt.

Es ist auch ein Schneidwerkzeug bekannt (EP-A-0 058 972), das Anlageflächen aufweist, die durch Drehung um eine Achse parallel zur Schneide in eine Aufnahmetasche eines Werkzeuggrundkörpers eingesetzt werden. An die jeweilige Schneide schließt eine gerade Freifläche an, die unter einem Freiwinkel in bezug auf die Schneide angeordnet ist.

Der Erfindung liegt die Aufgabe zugrunde, das gattungsgemäße Wendeschneidwerkzeug so auszubilden, daß an ihm eine größere Zahl von Schneiden vorgesehen werden kann, ohne daß die Herstellung des Wendeschneidwerkzeuges dadurch verteuert wird.

Diese Aufgabe wird beim gattungsgemäßen Wendeschneidwerkzeug erfindungsgemäß mit den kennzeichnenden Merkmalen des Anspruches 1 gelöst.

Beim erfindungsgemäßen Wendeschneidwerkzeug müssen lediglich die Umfangsflächen geschliffen werden. Da sie zumindest im Anschluß an die Schneiden auf dem gedachten Kreis liegen, ist nur ein einfacher Schleifprozeß erforderlich. Da die Umfangsflächen darüber hinaus im Axialschnitt konvex gekrümmt ausgebildet sind, sind angearbeitete oder gepreßte Freiwinkel überflüssig.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in Ansicht eine erste Ausführungsform eines erfindungsgemäßen, als Wendeschneidplatte ausgebildeten Wendeschneidwerkzeuges,
- Fig. 2 bis Fig. 4: jeweils in Darstellungen entsprechend Fig. 1 weitere Ausführungsformen von erfindungsgemäßen Wendeschneidwerkzeugen,
- Fig. 5: einen Axialschnitt durch das Wendeschneidwerkzeug gemäß Fig. 4,
- Fig. 6: in schematischer Darstellung und im Radialschnitt eine Wendeschneidwerkzeug, das in Eingriff mit einem Werkstück ist,
- Fig. 7: ein in einem Werkzeuggrundkörper montiertes Wendeschneidwerkzeug, das in Eingriff mit einem Werkstück ist,
- Fig. 8 bis Fig. 18: weitere Ausführungsformen von Wendeschneidwerkzeugen, die an einem Werkzeuggrundkörper befestigbar sind.

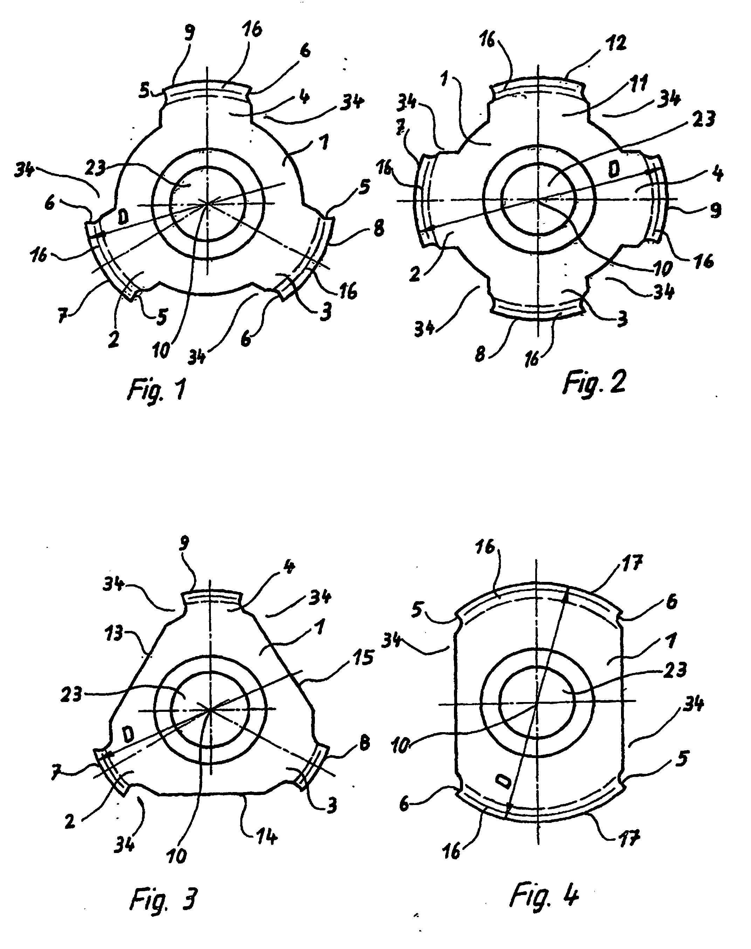

Die im folgenden anhand der Fig. 1 bis 7 beschriebenen Wendeschneidwerkzeuge sind als Wendeschneidplatten ausgebildet, die äußerst preiswert in der Herstellung sind und eine große Zahl von Schneiden haben, so daß die Wendeschneidplatten eine lange Einsatzdauer haben.

Die Wendeschneidplatte gemäß Fig. 1 hat einen scheibenförmigen Grundkörper 1, von dem in Winkelabständen von 120° Arme 2 bis 4 radial abstehen. Der Grundkörper 1 hat kreisförmigen Umriß. Die Arme 2 bis 4 erstrecken sich jeweils über einen Winkelbereich von etwa 45°. Selbstverständlich können die Arme 2 bis 4 sich auch über einen geringeren oder einen größeren Winkelbereich erstrekken.

Jeder Arm 2 bis 4 ist am freien Ende mit einem Schneidteil 16 und an seinen beiden Flanken jeweils mit radial liegenden Schneiden 5, 6 versehen, die jeweils unter einem radialen Spanwinkel angeordnet sind. Die Arme 2 bis 4 bzw. ihre Schneidteile 16 haben Umfangsflächen 7 bis 9, die auf einem gemeinsamen Durchmesser D um die Achse 10 der Wendeschneidplatte liegen.

Das Ausführungsbeispiel nach Fig. 2 unterscheidet sich von der vorigen Ausführungsform lediglich dadurch, daß vom Grundkörper 1 vier Arme 2 bis 4, 11 radial abstehen, die jeweils einen Winkelabstand von 90° voneinander haben. Die Umfangsflächen 7 bis 9, 12 der Arme 2 bis 4,11 bzw. ihrer Schneidteile 16 liegen wiederum auf dem gemeinsamen Durchmesser D, bezogen auf die Achse 10 der Wendeschneidplatte.

Fig. 3 zeigt eine Ausführungsform, bei der der Grundkörper 1 Dreieckform hat. Im Bereich der Ecken des dreieckförmigen Grundkörpers 1 steht jeweils ein Arm 2 bis 4 nach außen ab. Diese Arme sind gleich ausgebildet wie bei den vorigen Ausführungsbeispielen. Sie haben jeweils eine Umfangsfläche 7 bis 9, die auf einem gemeinsamen Durchmesser D liegen. Im Bereich zwischen benachbarten Armen 2 bis 4 hat der Grundkörper 1, in Axialansicht gesehen, gerade Seitenränder 13 bis 15.

Fig. 4 zeigt eine Ausführungsform, bei welcher der Grundkörper 1 der Wendeschneidplatte zwei Arme im Winkelabstand von 180° mit konvex gekrümmten Schmalseiten aufweist. An diesen Schmalseiten befinden sich die Schneidteile 16, deren Umfangsflächen 17 auf einem gemeinsamen Durchmesser D liegen, bezogen auf die Achse 10 der Wendeschneidplatte. Die Schneidteile 16 erstrecken sich jeweils nahezu über einen Winkelbereich von 90°. Selbstverständlich kann dieser Winkelbereich kleiner oder größer sein. An den beiden Stirnseiten der Schneidteile 16 sind - wie bei den vorhergehenden Ausführungsformen - die Schneiden 5, 6 vorgesehen, die radial liegen und einen entsprechenden Spanwinkel aufweisen.

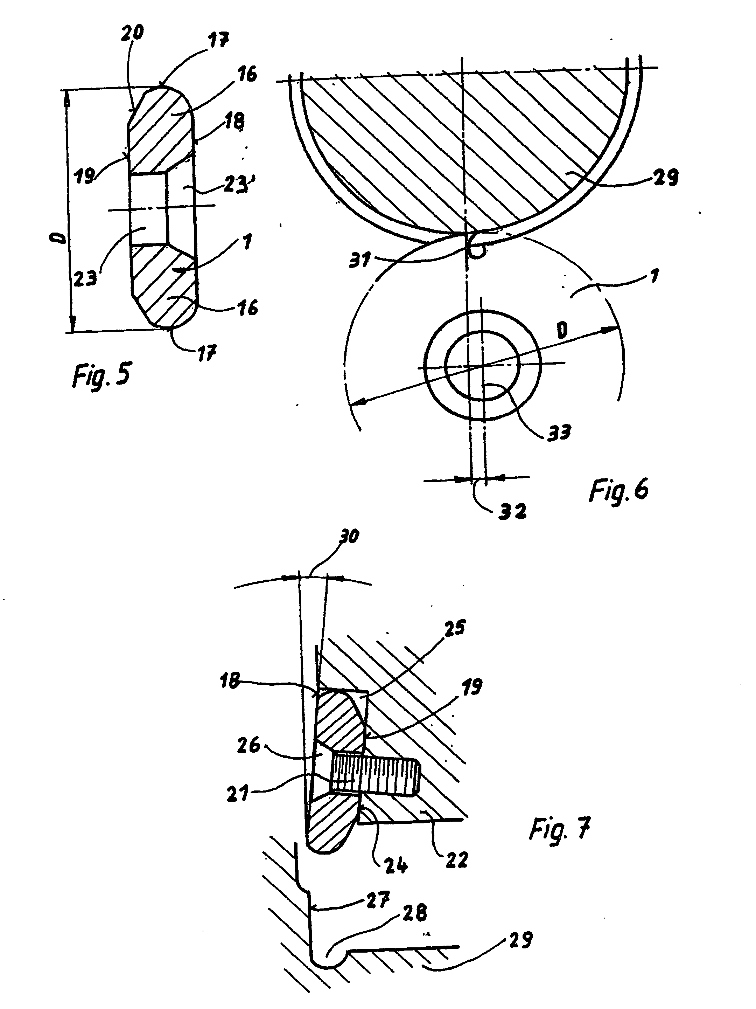

Wie Fig. 5 zeigt, hat der Grundkörper 1 der Wendeschneidplatte ebene Stirnseiten 18 und 19. Die Stirnseite 18 geht stetig gekrümmt in die Umfangsfläche 17 des Schneidteils 16 über. Sie geht über eine Kegelmantelfläche 20 in die Stirnseite 19 über. Selbstverständlich kann der Grundkörper 1 auch jede andere geeignete Querschnittsform haben.

In gleicher Weise sind auch die Wendeschneidplatten 1 bis 3 im Bereich der Arme 2 bis 4, 11 ausgebildet. Im Bereich außerhalb der Arme bzw. der Schneidteile hat der Grundkörper 1 bei sämtlichen Ausführungsformen rechteckigen Querschnitt.

Bei sämtlichen beschriebenen Ausführungsformen wird die Wendeschneidplatte an ihrem Umfang 7 bis 9, 12 mit einer profilierten Schleifscheibe entsprechend dem gewünschten, am Werkstück herzustellenden Profil rotationssymmetrisch geschliffen oder ohne weitere Bearbeitung gepreßt. Fig. 5 zeigt für die Wendeschneidplatte gemäß Fig. 4 beispielhaft diese Querschnittsausbildung der Schneidteile 16. Je nach Gestaltung der Wendeschneidplatten sind die Schneiden 5, 6 mehrfach vorgesehen.

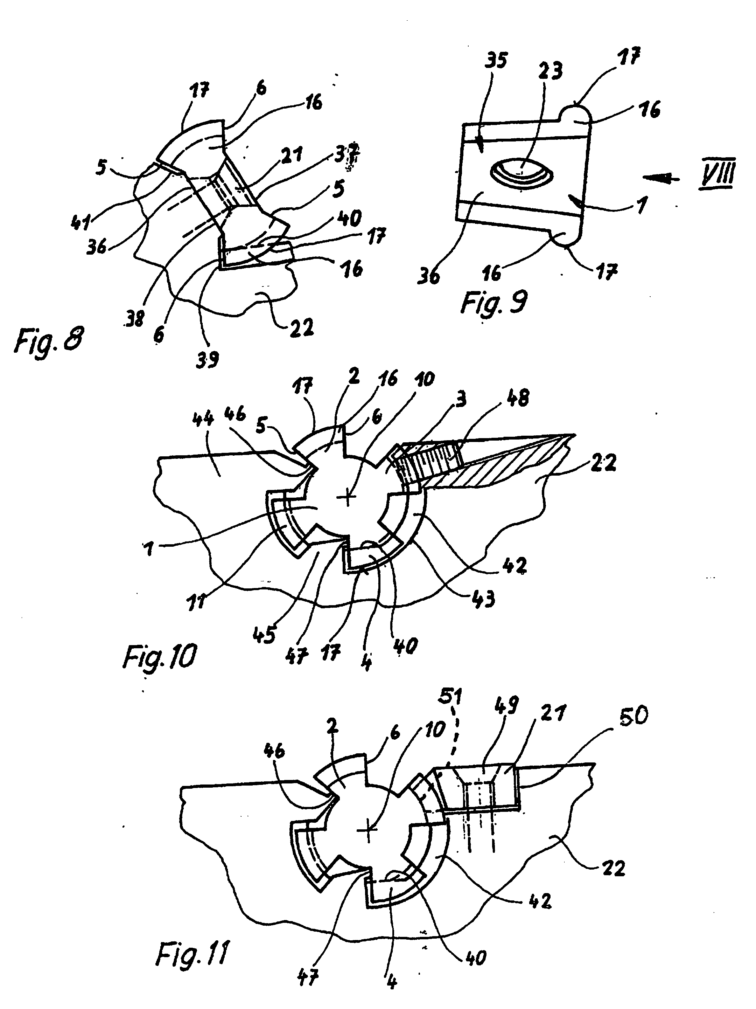

Fig. 7 zeigt die Wendeschneidplatte, die mittels eines Befestigungselementes 21, vorzugsweise einer Schraube, an einem Werkzeuggrundkörper 22 befestigt ist. Die Wendeschneidplatten haben, wie die Fig. 1 bis 5 zeigen, für den Durchtritt des Befestigungselementes 21 eine zentrale Öffnung 23, die den Grundkörper 1 der Wendeschneidplatte durchsetzt. Von der Stirnseite 19 aus hat die Durchgangsöffnung 23 kreisförmigen Querschnitt. Sie geht in einen kegelförmig sich erweiternden Endabschnitt 23' über (Fig. 5), der sich bis zur Stirnseite 18 des Grundkörpers 1 erstreckt. Wie Fig. 7 zeigt, liegt die Wendeschneidplatte mit der Stirnseite 19 am Boden 24 einer Aufnahme 25 des Werkzeuggrundkörpers 22 flächig an. Der Kopf 26 des Befestigungselementes 21 liegt im konischen Endabschnitt 23' der Durchgangsöffnung 23 versenkt. Vorteilhaft ist die Symmetrieachse der Schraubenbohrung 23 der Wendschneidplatte gegenüber der Gewindebohrung im Werkzeuggrundkörper 22 versetzt angeordnet.

Mit der Wendeschneidplatte wird eine Planfläche 27 sowie als Profil 28 ein Einstich an einem Werkstück 29 hergestellt. Die Planfläche 27 schließt unmittelbar an den Einstich 28 an. Die Wendeschneidplatte wird so am Werkzeuggrundkörper 22 befestigt, daß die Stirnseite 18 der Wendeschneidplatte um einen spitzen Winkel 30 geneigt zur Planfläche 27 des Werkstückes 29 am Werkzeuggrundkörper 22 angeordnet ist. Dadurch wird eine Freistellung der jeweiligen Schneide 5, 6 zur zu bearbeitenden Planfläche 27 des Werkstückes 29 erreicht. Die Querschnittsform des Einstiches 28 wird durch die Umrißform der Wendeschneidplatte im Bereich der Schneidteile 16 bestimmt. Darum werden die Wendeschneidplatten mit der profilierten Schleifscheibe oder unmittelbar durch Pressen im Bereich dieser Schneidteile entsprechend gefertigt.

Jede Schneide 5, 6 wird am Grundkörper 1 der jeweiligen Wendeschneidplatte so angeordnet, daß sie nach dem Einbau der Wendeschneidplatte in den Werkzeuggrundkörper 22 mit ihrer Schnittebene 31 mindestens auf der Mitte des äußeren Umfanges der auf dem Durchmesser D liegenden Umfangsfläche 7 bis 9, 12, 17 der Wendeschneidplatte angeordnet ist. Vorteilhaft jedoch hat die Schnittebene 31 der Schneiden 5, 6 einen Abstand 32 von einer Axialebene 33 der Wendeschneidplatte. Dadurch wird erreicht, daß die Umfangsfläche 7 bis 9, 12, 17 der jeweiligen Wendeschneidplatte während der Bearbeitung des Werkstückes 29 nach dem Materialabtrag am Werkstück sofort und an jeder Stelle der Form aufgrund der beschriebenen Querschnittsform der Umfangsflächen 7 bis 9, 12, 17 vom Werkstück 29 freikommt. Wie anhand von Fig. 5 beispielhaft beschrieben worden ist, ist die Umfangsfläche 17 im Axialschnitt konvex gekrümmt und geht über die Kegelmantelfläche 20 in die Stirnseite 19 des Grundkörpers 1 der Wendeschneidplatte über. Eine solche Querschnittsausbildung weisen auch die anderen Ausführungsformen gemäß den Fig. 1 bis 3 im Bereich der Schneidteile auf. Da die Umfangsflächen 7 bis 9, 12, 17 sofort vom Werkstück 29 freikommen, sind unmittelbar an die Schneiden 5, 6 angearbeitete oder gepreßte Freiwinkel überflüssig. Die an die Schneiden 5, 6 unmittelbar anschließenden Bereiche der Umfangsflächen 7 bis 9, 12, 17 liegen darum auf dem Kreisdurchmesser D. Darum kann an den beiden Stirnseiten der Schneidteile 16 der verschiedenen Wendeschneidplatten jeweils eine Schneide 5, 6 vorgesehen sein. Da in Umfangsrichtung der Schneidteile bzw. der Wendeschneidplatten ein Freiwinkel nicht vorgesehen werden muß, lassen sich die Wendeschneidplatten auch sehr einfach und kostengünstig herstellen bzw. nachschleifen.

In den dargestellten Ausführungsbeispielen gemäß den Fig. 1 bis 4 liegen die Umfangsflächen 7 bis 9, 12, 17 im Bereich zwischen den beiden Schneiden 5, 6 jeweils über ihre Länge auf dem Durchmesser D. Es ist aber auch möglich, beispielsweise in halber Breite jeder Umfangsfläche eine Profilierung oder einen Einschnitt vorzusehen für Spann- und/oder Orientierungs/Lagebestimmungszwecke.

Wesentlich ist, daß die an die Schneiden 5, 6 anschließenden Bereiche der Umfangsflächen 7 bis 9, 12, 17 auf einem konstanten Durchmesser D liegen.

Wird die Wendeschneidplatte, wie anhand von Fig. 7 beschrieben worden ist, um den spitzen Winkel 30 geneigt zur zu bearbeitenden Planfläche 27 des Werkstückes 29 am Werkzeuggrundkörper 22 angeordnet, muß die Wendeschneidplatte im Bereich der Umfangsfläche 7 bis 9, 12, 17 um die Größe dieses Freiwinkels 30 korrigiert werden. Mit der Wendeschneidplatte kann dann sowohl die Planfläche 27 als auch der Einstich 28 durch spanabhebende Bearbeitung hergestellt werden.

Mit den beschriebenen Wendeschneidplatten können die Werkstükke 29 durch Rundfräsen, Drehen, Drehräumen, Räumen, Strehlen, Wirbeln und dergleichen bearbeitet werden.

Wie die verschiedenen Ausführungsbeispiele nach den Fig. 1 bis 4 zeigen, können die Wendeschneidplatten mit einer unterschiedlichen Zahl von Schneiden 5, 6 versehen werden, die mit geringem Herstellungsaufwand am Grundkörper 1 der Wendeschneidplatten gefertigt werden können.

Wie sich aus den Fig. 1 bis 4 ergibt, sind an den Wendeschneidplatten Spanaufnahmeräume 34 vorgesehen. Sie befinden sich im Bereich zwischen den benachbarten Armen 2 bis 4, 11 bzw. zwischen den benachbarten Schneidteilen 16. Bei herkömmlichen Werkzeugen sind die Spanaufnahmeräume am Werkzeuggrundkörper vorgesehen, der durch die Späne einem erheblichen Verschleiß unterliegt, da der Werkzeuggrundkörper einen höheren Reibungsbeiwert als die Wendeschneidplatte hat und nicht aus einem so harten Material wie diese besteht. Da bei den beschriebenen Ausführungsformen die Spanaufnahmeräume 34 Teil der Wendeschneidplatte sind, die aus sehr hartem Material besteht, wird ein Verschleiß des Werkzeuggrundkörpers einfach vermieden. Im Bereich der Spanaufnahmeräume 34 befinden sich auch die Spanflächen und können in vorteilhafter Weise auch Spanbrecher in Form von Stufen, Wellen oder Noppen dort angeordnet sein. Da auch die weitere Umgebung der Wendeschneidplatte dem Angriff der Späne und bei Schneidenausbruch auch diesen harten Schneidstoffpartikein ausgesetzt ist, empfiehlt es sich, den Werkzeuggrundkörper in Kassettenbauform zu wählen. Dies ermöglicht es, bestimmte Gruppen von Schneiden spezifisch auszulegen, z. B. als Schruppoder Schlichtkassette, um für den Fall partieller Beschädigungen Schwesternkassetten zum schnellen Austausch bereitzustellen.

Die Fig. 8 und 9 zeigen eine weitere Ausführungsform eines Wendeschneidwerkzeuges. Es hat den Grundkörper 1, der etwa rechteckigen Querschnitt hat (Fig. 8) und an dessen Schmalseiten die Schneidteile 16 vorgesehen sind. Im Unterschied zur Ausführungsform nach den Fig. 4 und 5 verbreitern sich die Schneidteile 16 vom Grundkörper 1 aus kontinuierlich nach außen, so daß die Schneidteile 16 an der Umfangsfläche 17 ihre größte Breite haben. Die Umfangsflächen 17 der beiden Schneidteile 16 liegen auf dem gleichen Durchmesser D. Darum kann auch dieses Wendeschneidwerkzeug sehr einfach rotationssymmetrisch geschliffen werden. An beiden Stirnseiten der Schneidteile 16 ist jeweils die Schneide 5, 6 vorgesehen.

Vom Grundkörper 1 steht ein kegelstumpfförmiger Ansatz 35 ab, der vorzugsweise einstückig mit dem Grundkörper ausgebildet ist. Der Ansatz 35 verjüngt sich in Richtung auf sein freies Ende und hat zwei ebene Flächen 36 und 37, die parallel zueinander liegen und als Anlageflächen dienen können. In der in Fig. 8 dargestellten montierten Lage liegt das Wendeschneidwerkzeug mit der Anlagefläche 36 an einer Gegenfläche 38 des Werkzeuggrundkörpers 22 an. Das Wendeschneidwerkzeug kann so gedreht werden, daß es auch mit der Anlagefläche 37 an der Gegenfläche 38 zur Anlage kommt. Der Ansatz 35 ist mit der Durchgangsöffnung 23 für das Befestigungselement 21 versehen.

Die ebene Gegenfläche 38 des Werkzeuggrundkörpers 22 schließt stumpfwinklig an eine ebene Fläche 39 an, die rechtwinklig in eine Abstimmfläche 40 übergeht. An ihr wird das Wendeschneidwerkzeug in die erforderliche genaue Lage in bezug auf den Werkzeuggrundkörper 22 angelegt. Bei der Montage wird das Wendeschneidwerkzeug mit einer der beiden Anlageflächen 36, 37 an die Gegenfläche 38 angelegt und so weit verschoben, bis es mit dem entsprechenden Schneidteil 16 an der Abstimmfläche 40 anliegt. Dann wird das Wendeschneidwerkzeug mit dem Befestigungselement 21 am Werkzeuggrundkörper 22 befestigt. Im dargestellten Ausführungsbeispiel ist das Befestigungselement 21 eine Schraube, die in eine entsprechende Gewindebohrung in der Gegenfläche 38 geschraubt wird. Die Durchgangsöffnung 23 weist zwei kegelförmige Endabschnitte zur Aufnahme des Kopfes der Befestigungsschraube auf. Da das Wendeschneidwerkzeug mit beiden Anlageflächen 36, 37 wahlweise an der Gegenfläche 38 anliegen kann, sind die beiden konischen Endabschnitte der Durchgangsöffnung vorgesehen. Die Fläche 39 ist zurückgesetzt, so daß die entsprechende Schneide 5, 6 in montierter Lage nicht mit der Fläche 39 in Berührung kommen kann.

Die Gegenfläche 38 geht auf der der Fläche 39 gegenüberliegenden Seite ebenfalls stumpfwinklig in eine weitere Fläche 41 über, die ebenfalls so weit zurückgesetzt ist, daß die Schneide 5, 6 des Schneidenteiles 16 nicht in Berührung mit ihr gelangen kann.

Die Schneidteile 16 sind im Axialschnitt wiederum entsprechend der gewünschten Querschnittsform des am Werkstück 22 herzustellenden Einstiches 28 ausgebildet, wie dies anhand der Fig. 6 und 7 erläutert worden ist.

Das Wendeschneidwerkzeug gemäß Fig. 10 hat insgesamt acht Schneiden 5, 6, die an den radial vom Grundkörper 1 vorstehenden Armen 2 bis 4, 11 vorgesehen sind. In Axialansicht entspricht dieses Ausführungsbeispiel im wesentlichen der Ausführungsform gemäß Fig. 2. Die Umfangsflächen 17 der an die freien Enden der Arme anschließenden Schneidteile 16 liegen wiederum auf dem gemeinsamen Durchmesser D, so daß diese Umfangsflächen in einem Arbeitsgang rotationssymmetrisch geschliffen werden können. Wie beim vorigen Ausführungsbeispiel steht vom Grundkörper 1 der konisch sich verjüngende Ansatz 35 ab. Der Werkzeuggrundkörper 22 hat die Werkzeugaufnahme 42, die in Achsrichtung der Wendeschneidplatte an beiden Enden offen ist. Die Werkzeugaufnahme 42 hat einen zylindrischen Boden 43, von dem nach innen zwei Ansätze 44, 45 ragen. Sie sind gleich ausgebildet und liegen mit Abstand voneinander. Sie sind am freien Ende verjüngt ausgebildet und haben einen kurzen Vorsprung 46, 47, an denen das Wendeschneidwerkzeug mit zwei Armen 2, 4 anliegt. Zwischen die beiden Ansätze 44, 45 ragt der Arm 11 mit Spiel, so daß seine Schneiden 5, 6 nicht mit Wandungen der Ansätze 44, 45 bzw. dem Boden 43 der Werkzeugaufnahme 42 in Berührung kommen.

Das Wendeschneidwerkzeug wird durch eine Druckschraube 48 gegen die Vorsprünge 46, 47 der Ansätze 44, 45 und gegen die Abstimmfläche 40 gedrückt. Die Druckschraube 48 liegt versenkt im Werkzeuggrundkörper 22 und drückt mit ihrer Stirnseite gegen den Ansatz 35. Die Vorsprünge 46, 47 sind auf der von der Druckschraube 48 abgewandten Seite der entsprechenden Arme 2, 4 vorgesehen. Da die Vorsprünge 46, 47 eine Erstreckung in Achsrichtung und quer dazu haben, wird das Wendeschneidwerkzeug gegen den Druck der Druckschraube 48 einwandfrei abgestützt. Da die Druckschraube 48 quer zur Achse 10 des Wendeschneidwerkzeuges an dessen Umfang angreift, ist keine Durchgangsöffnung im Grundkörper 1 für die Druckschraube 48 erforderlich.

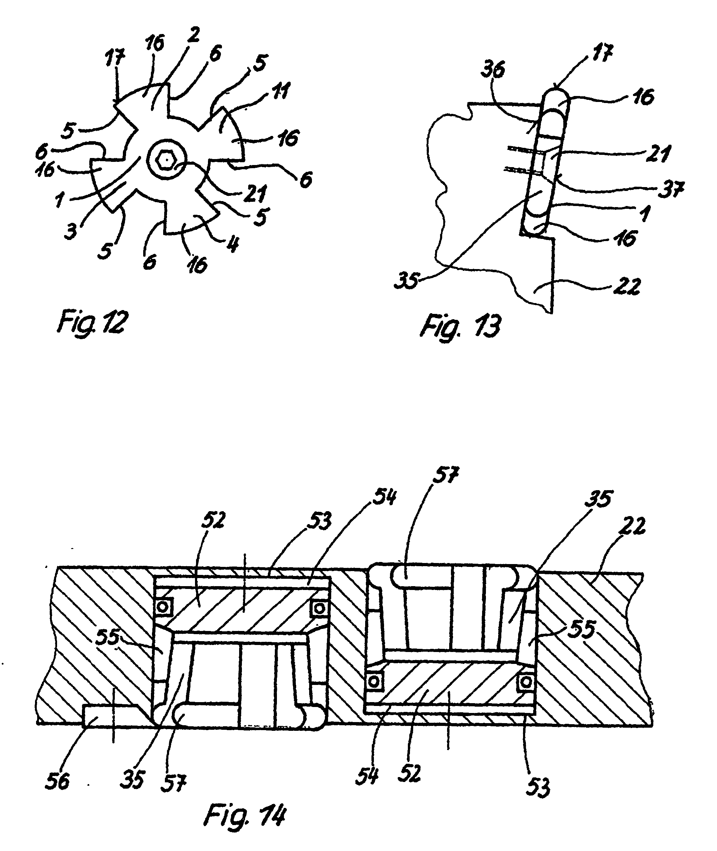

Das Wendeschneidwerkzeug gemäß Fig. 11 ist gleich ausgebildet wie das Ausführungsbeispiel nach Fig. 10. Der Unterschied besteht lediglich in der Befestigung des Wendeschneidwerkzeuges in der Aufnahme 42 des Werkzeuggrundkörpers 22. Als Befestigungselement 21 ist ein Keilkörper vorgesehen, der an seiner dem Wendeschneidwerkzeug zugewandten Stirnseite keilförmig ausgebildet ist. Das Befestigungselement 21 wird mit einer Schraube 49, die senkrecht zur Achse 10 des Wendeschneidwerkzeuges liegt, am Werkzeuggrundkörper 22 befestigt. Er ist zur Aufnahme des Befestigungselementes 21 mit einer Vertiefung 50 versehen, die in Richtung auf die Werkzeugaufnahme 42 offen ist. Beim Anziehen der Schraube 49 wird das Befestigungselement 21 in die Vertiefung 50 gezogen. Eine Keilfläche 51 am freien Ende des Befestigungselementes 21 legt sich gegen den Ansatz 35 des Grundkörpers 1. Mit der Keilfläche 51 werden die Arme 2, 4 fest gegen die Vorsprünge 46, 47 gedrückt. Aufgrund der Keilfläche 51 läßt sich das Wendeschneidwerkzeug sicher im Aufnahmeraum 42 verspannen. Wie bei der vorigen Ausführungsform steht der Arm 2 mit seiner Arbeitsschneide 6 über den Werkzeuggrundkörper 22 vor, so daß mit der Schneide 6 das entsprechende Werkzeug bearbeitet werden kann. Die Abstützung des Wendeschneidwerkzeuges erfolgt auf der gegenüberliegenden Seite des Armes 2 bzw. am Arm 4, so daß das Wendeschneidwerkzeug gegen die Schnittkräfte abgestützt wird.

Während beim vorigen Ausführungsbeispiel die Druckschraube 48 zurückgeschraubt wird, wenn das Wendeschneidwerkzeug verstellt werden soll, um eine neue Schneidkante in Position zu bringen, wird bei der Ausführungsform nach Fig. 11 die Schraube 49 gelokkert und das keilförmige Befestigungselement 21 aus der Vertiefung 50 teilweise axial herausgezogen.

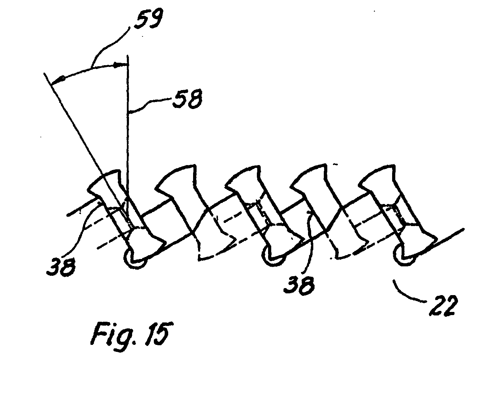

Die Fig. 12 und 13 zeigen ein Wendeschneidwerkzeug, das vier radial abstehende Arm 2 bis 4, 11 aufweist, die am freien Ende mit den Schneidteilen 16 versehen sind. Die Umfangsflächen 17 der Schneidteile 16 liegen wiederum auf dem konstanten Durchmesser D. Jeder Arm 2 bis 4, 11 bzw. jeder Schneidteil 16 weist an den Stirnseiten die radial liegenden Schneiden 5, 6 auf. Wie bei den vorherigen Ausführungsbeispielen sind die Schneidteile 16 im Axialschnitt entsprechend der Form des herzustellenden Profiles 28 im Werkstück 29 ausgebildet. Vom Grundkörper 1, an welchem die radial abstehenden Arme 2 bis 4, 11 vorgesehen sind, steht der Ansatz 35 mit den parallel zueinander liegenden Anlageflächen 36, 37 ab, wie dies anhand des Ausführungsbeispieles nach den Fig. 8 und 9 erläutert worden ist. Das Wendeschneidwerkzeug wird mit dem als Schraube ausgebildeten Befestigungselement 21 unmittelbar am Werkzeuggrundkörper 22 verschraubt.

Bei dem in Fig. 14 dargestellten Ausführungsbeispiel werden die Wendeschneidwerkzeuge im Werkzeuggrundkörper 22 hydraulisch verspannt. Aus Fig. 14 ergibt sich, daß der Werkzeuggrundkörper 22 scheibenförmig ausgebildet ist. Auch bei den Ausführungsformen nach den Fig. 8 bis 13 hat der Werkzeuggrundkörper eine solche Ausbildung. Die Wendeschneidwerkzeuge sind im Bereich des Umfanges des Werkzeuggrundkörpers 22 angeordnet. Auch bei den vorigen Ausführungsformen ist der verwendete Werkzeuggrundkörper 22 entsprechend ausgebildet.

In den entsprechenden Aufnahmeräumen für die Wendeschneidwerkzeuge ist jeweils ein Klemmkolben 52 untergebracht, der mit einem Boden 53 des Aufnahmeraumes einen Druckraum 54 begrenzt, in den Hydraulikmedium zur Druckbeaufschlagung des Klemmkolbens 52 eingebracht wird. Die entsprechenden Zuführbohrungen sind der Übersichtlichkeit wegen nicht dargestellt. Die Klemmkolben 52 sind auf ihrer vom Druckraum 54 abgewandten Seite mit einer Spreizhülse 55 versehen, die elastisch aufweitbar ist und in die der Ansatz 35 des Wendeschneidwerkzeuges eingesetzt werden kann. Das Wendeschneidwerkzeug ist entsprechend einem der Ausführungsbeispiele gemäß den Fig. 8 bis 13 ausgebildet.

Das Wendeschneidwerkzeug wird in seiner Achsrichtung an einer seiner die Werkstückform erzeugenden Schneidkante angeschlagen. Hierzu ist an einer Seitenfläche des Werkzeuggrundkörpers 22 ein Anschlagelement 56 vorgesehen, das sich bis über den Rand des Aufnahmeraumes für das Wendeschneidwerkzeug erstreckt. An diesem Anschlagelement 56 liegt das Wendeschneidwerkzeug in montierter Lage an. Durch Druckbeaufschlagung des Klemmkolbens 52 wird das Wendeschneidwerkzeug gegen das Anschlagelement 56 gedrückt und damit axial fixiert. Außerdem wird die radial wirkende Spreizhülse 55, die mit einem radial vorstehenden Rand 57 an der Innenwandung des Aufnahmeraumes anliegt, durch die Druckbeaufschlagung des Klemmkolbens 52 radial zusammengedrückt. Auf diese Weise wird der kegelstumpfförmige Ansatz 35 des Wendeschneidwerkzeuges festgeklemmt. Die radial wirkende Spreizhülse 55 paßt sich unterschiedlichen Fertigungstoleranzen des kegelstumpfförmigen Ansatzes 35 an, so daß das Wendeschneidwerkzeug zuverlässig gespannt wird.

Für die Zuführung des Hydraulikmediums steht an Maschinen die entsprechende Hydraulikquelle zur Verfügung. Die Druckkammern 54 im Werkzeuggrundkörper 22 sind vorteilhaft durch entsprechende Bohrungen miteinander verbunden.

Fig. 15 zeigt schematisch Wendeschneidwerkzeuge, die entsprechend dem Ausführungsbeispiel gemäß den Fig. 8 und 9 ausgebildet sind. Als Werkzeuggrundkörper 22 ist eine Kassette vorgesehen, an deren Rand die Wendeschneidwerkzeuge befestigt werden können. Sie liegen jeweils unter einem Winkel geneigt zur Werkzeugradialen 58. Dieser Neigungswinkel 59 liegt im Bereich zwischen etwa 10° und etwa 60° und beträgt vorzugsweise 30°. Der Werkzeuggrundkörper 22 ist zur Abstützung der Wendeschneidwerkzeuge mit den ebenen Gegenflächen 38 versehen, an denen das Wendeschneidwerkzeug mit der Anlagefläche 36 oder 37 (Fig. 8) flächig anliegt. Die Werkzeuge sind mit den als Schrauben ausgebildeten Befestigungselementen 21 (Fig. 8) am Werkzeuggrundkörper 22 in der beschriebenen Weise befestigt. Wie Fig. 15 zeigt, kann am Rand des Werkzeuggrundkörpers 22 eine große Zahl von Wendeschneidwerkzeugen mit geringem Abstand voneinander befestigt werden. Da die Werkzeuge unter dem Neigungswinkel 59 zur Werkzeugradialen 58 angeordnet sind, sind die Befestigungsschrauben einfach zugänglich. Dabei können verhältnismäßig große Schrauben verwendet werden. Insbesondere wird durch die beschriebene Ausbildung ein eng geschlossener Kraftfluß erreicht, wobei die beschriebene Kassettenbauweise möglich ist.

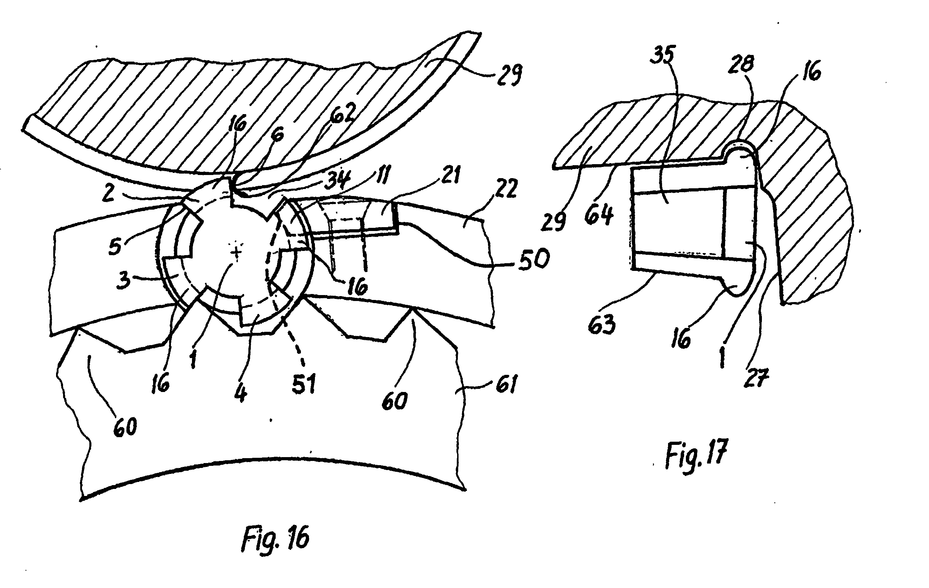

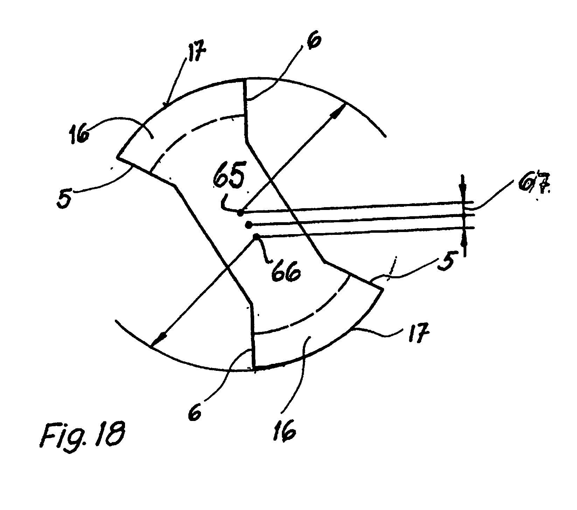

Die Fig. 16 und 17 zeigen eine weitere Möglichkeit der Ausbildung eines Wendeschneidwerkzeuges. Es hat eine Ausbildung, wie sie beispielsweise in den Fig. 10 bis 13 dargestellt ist. Die Befestigung des Wendeschneidwerkzeuges erfolgt mittels des keilförmigen Befestigungselementes 21, wie es anhand von Fig. 11 erläutert worden ist. Die vom Grundkörper 1 radial abstehenden Arme 2 bis 4 11 mit den Schneidteilen 16 wirken als Zähne, die mit den Zähnen 60 eines im Werkzeuggrundkörper 22 gelagerten Zahnrades oder Zahnkranzes 61 zusammenwirken. Die Drehachse des Zahnrades/Zahnkranzes 61 fällt mit der Achse des Werkzeuggrundkörpers 22 zusammen. Durch Drehen des Zahnrades/Zahnkranzes 61 um den Betrag einer Teilung kann eine neue Schneidkante 5 bzw. 6 des Wendeschneidwerkzeuges in die Bearbeitungsposition gebracht werden. Selbstverständlich wird zum Weiterschalten des Wendeschneidwerkzeuges zuvor das Befestigungselement 21 gelockert, so daß das Wendeschneidwerkzeug im gewünschten Maße um eine parallel zur Achse des Werkzeuggrundkörpers 22 liegende Achse gedreht werden kann. Anschließend wird das Wendeschneidwerkzeug mit dem Befestigungselement 21 gespannt.

Im Gegensatz zur Ausführungsform nach Fig. 11 erfolgt die Schnittkraftabstützung nicht durch Vorsprünge 46, 47 an in den Aufnahmeraum 42 des Werkzeuggrundkörpers 22 ragenden Ansätzen 44, 45, sondern an der Seitenflanke eines der Zähne 60 und einer zentrischen Aufnahme. Das keilförmige Befestigungselement 21 und der das Wendeschneidwerkzeug gegen die Schnittkräfte abstützende Zahn 60 liegen etwa diametral einander gegenüber (Fig. 16). Das Befestigungselement 21 belastet in Klemmstellung das Wendeschneidwerkzeug im Gegenuhrzeigersinn, in der Darstellung gemäß Fig. 16 gesehen. Auch die beim Bearbeiten des Werkstückes 29 mit der Schneide 6 auftretenden Schnittkräfte belasten das Wendeschneidwerkzeug in dieser Richtung. Der Arm 3 liegt dementsprechend mit seiner im Gegenuhrzeigersinn vorderen Seitenfläche am Zahn 60 des Zahnrades/Zahnkranzes 61 an. Durch diese Anlage wird eine Schnitt-kraftabstützung erreicht. Außerdem wird durch die jeweiligen Flanken des Armes 3 des Wendeschneidwerkzeuges und des Zahnes 61 eine Lagebestimmung erreicht.

Fig. 16 zeigt, wie der von der Schneide 6 am Werkstück 29 abgetragene Span 62 im Spanaufnahmeraum 34 zwischen benachbarten Armen des Wendeschneidwerkzeuges aufgenommen wird, wie dies auch anhand der Fig. 1 bis 4 erläutert worden ist.

Wie Fig. 17 zeigt, wird mit dem Wendeschneidwerkzeug der Einstich 28 am Werkstück 29 durch spanende Bearbeitung hergestellt. Außerdem kann am Werkstück 29 in der beschriebenen Weise die Planfläche 27 des Werkstückes 29 bearbeitet werden. Im Unterschied zu den Ausführungsformen nach den Fig. 1 bis 5, bei denen das Wendeschneidwerkzeug plattenförmig ausgebildet ist, haben die Wendeschneidwerkzeuge nach den Fig. 8 bis 14 den kegelstumpfförmigen Ansatz 35, der zur Bearbeitung des Werkstückes 29 herangezogen werden kann. Wie Fig. 17 zeigt, ist dieser Ansatz 35 mit Schneiden 63 versehen, mit denen eine Fläche 64 am Werkstück 29 bearbeitet werden kann. Da das Wendeschneidwerkzeug, wie anhand von Fig. 7 erläutert worden ist, unter dem Neigungswinkel 30 geneigt zur Planfläche 27 angeordnet ist, ist der kegelstumpfförmige Ansatz 35 im Ausführungsbeispiel gemäß Fig. 17 so ausgebildet, daß seine Erzeugende senkrecht zur Planfläche 27 des Werkstückes 29 liegt. Auf diese Weise kann mit dem Wendeschneidwerkzeug gleichzeitig der Einstich 28 hergestellt und die Werkstückfläche 64 bearbeitet werden.

Fig. 18 zeigt ein Wendeschneidwerkzeug, das im wesentlichen entsprechend dem Ausführungsbeispiel nach den Fig. 8 und 9 ausgebildet ist. Im Unterschied zu sämtlichen zuvor beschriebenen Ausführungsbeispielen liegen die Umfangsflächen 17 der Schneidteile 16 auf Kreisbogenabschnitten, die unterschiedliche Mittelpunkte 65 und 66 haben. In der Darstellung gemäß Fig. 18 ist der Mittelpunkt 65 der oberen Umfangsfläche 17 und der Mittelpunkt 66 der unteren Umfangsfläche 17 zugeordnet. Beide Mittelpunkte 65, 66 liegen mit Abstand zur Achse 10 des Wendeschneidwerkzeuges. Somit haben die beiden Mittelpunkte 65, 66 einen senkrechten Abstand 67 voneinander. Auch bei einer solchen Ausbildung eines Wendeschneidwerkzeuges lassen sich die Umfangsflächen 17 sehr einfach beispielsweise mit einer profilierten Schleifscheibe entsprechend der gewünschten Profilform am Werkstück rotationssymmetrisch schleifen oder ohne weitere Bearbeitung pressen.

Auch bei den zuvor beschriebenen Ausführungsformen von Wendeschneidwerkzeugen können die Umfangsflächen 7 bis 9, 12, 17 auf Kreisbogenabschnitten liegen, die unterschiedliche Mittelpunkte haben.

Bei sämtlichen Ausführungsbeispielen ist es ferner möglich, die Umfangsflächen 7 bis 9, 12, 17 auf Kurvenabschnitten, wie Ellipsen, Hyperbeln und dgl., anzuordnen. In diesem Falle liegen die Umfangsflächen nicht mehr auf Kreisbogenabschnitten oder auf einem gemeinsamen Durchmesser. Solche Kurvenabschnitte lassen sich aber ebenfalls sehr einfach und kostengünstig durch Konturschleifen herstellen. Im übrigen sind die Wendeschneidwerkzeuge mit solchen Kurvenabschnitten gleich ausgebildet, wie es anhand der Figuren 1 bis 18 im einzelnen beschrieben worden ist.

## Patentansprüche

1. Wendeschneidewerkzeug, das an einem Werkzeuggrundkörper (22) befestigbar ist und wenigstens vier Schneiden (5, 6) aufweist, an die Umfangsflächen (7 bis 9, 12, 17) anschließen, die zumindest im Anschluß an die Schneiden (5, 6) auf einem gedachten Kreis mit einem gemeinsamen Durchmesser (D) um die Achse (10) des Wendeschneidwerkzeuges liegen,
**dadurch gekennzeichnet, daß** die Umfangsflächen (7 bis 9, 12, 17) im Axialschnitt konvex gekrümmt sind.

2. Werkzeug nach Anspruch 1,
**dadurch gekennzeichnet, daß** die Umfangsflächen (7 bis 9, 12, 17) im Querschnitt an die Form eines in einem Werkstück (29) herzustellenden Profiles (28), vorzugsweise eines Einstiches, angepaßt sind.

3. Werkzeug nach Anspruch 1 oder 2,
**dadurch gekennzeichnet, daß** die Umfangsflächen (7 bis 9, 12, 17) an radial von einem Grundelement (1) abstehenden Armen (2 bis 4, 11) vorgesehen sind.

4. Werkzeug nach Anspruch 3,
**dadurch gekennzeichnet, daß** der Bereich zwischen benachbarten Armen (2 bis 4, 11) einen Spanaufnahmeraum (34) bildet.

5. Werkzeug nach Anspruch 3 oder 4,
**dadurch gekennzeichnet, daß** vom Grundelement (1) quer zum Arm (2 bis 4, 11) ein kegelstumpfförmiger Ansatz (35) absteht, der vorzugsweise zwei Anlageflächen (36, 37) aufweist, mit denen das Wendeschneidwerkzeug an einer Gegenfläche (38) des Werkzeuggrundkörper (22) anlegbar ist.

6. Werkzeug nach Anspruch 5,
**dadurch gekennzeichnet, daß** die Anlageflächen (36, 37) eben sind und vorteilhaft senkrecht zu den Stirnseiten (18, 19) des Grundelementes (1) liegen.

7. Werkzeug nach Anspruch 5 oder 6,
**dadurch gekennzeichnet, daß** die Arme (2 bis 4, 11) radial über den Ansatz (35) ragen.

8. Werkzeug nach einem der Ansprüche 5 bis 7,
**dadurch gekennzeichnet, daß** der Ansatz (35) mit Schneiden (63) versehen ist, die sich in Längsrichtung des Ansatzes (35) erstrecken.

9. Werkzeuganordnung mit einem Werkzeuggrundkörper (22) und einem Wendeschneidwerkzeug nach einem der Ansprüche 1 bis 8,
**dadurch gekennzeichnet, daß** das Wendeschneidwerkzeug zu einer Radialen (58) des Werkzeuggrundkörpers (22) unter einem Winkel (59) zwischen etwa 10° und 60°, vorzugsweise etwa 30°, geneigt angeordnet ist.

10. Werkzeuganordnung mit einem Werkzeuggrundkörper (22) und einem Wendeschneidwerkzeug nach einem der Ansprüche 1 bis 9,
**dadurch gekennzeichnet, daß** der Werkzeuggrundkörper (22) mindestens eine Aufnahme (25, 42) für das Wendeschneidwerkzeug aufweist, die vorzugsweise die Form einer profilierten Bohrung aufweist und in die vorteilhaft Ansätze (44, 45) ragen, an denen das Wendeschneidwerkzeug gegen die Schnittkraft abgestützt ist.

11. Werkzeuganordnung mit einem Werkzeuggrundkörper (22) und einem Wendeschneidwerkzeug nach einem der Ansprüche 1 bis 10,
**dadurch gekennzeichnet, daß** das Wendeschneidwerkzeug unmittelbar durch wenigstens eine Schraube (48) am Werkzeuggrundkörper (22) befestigbar ist, und daß vorzugsweise die Symmetrieachse der Schraubbohrung des Wendeschneidwerkzeuges gegenüber der Gewindebohrung im Werkzeuggrundkörper (22) versetzt angeordnet ist.

12. Werkzeuganordnung mit einem Werkzeuggrundkörper (22) und einem Wendeschneidwerkzeug nach einem der Ansprüche 1 bis 11,
**dadurch gekennzeichnet, daß** das Wendeschneidwerkzeug durch mindestens ein Spannelement (21, 55) am Werkzeuggrundkörper (22) gehalten ist.

13. Werkzeuganordnung mit einem Werkzeuggrundkörper (22) und einem Wendeschneidwerkzeug nach Anspruch 12,
**dadurch gekennzeichnet, daß** das Spannelement (21) keilförmig ausgebildet ist und quer zur Achse am Wendeschneidwerkzeug angreift.

14. Werkzeuganordnung mit einem Werkzeuggrundkörper (22) und einem Wendeschneidwerkzeug nach Anspruch 12,
**dadurch gekennzeichnet, daß** das Spannelement (55) eine Spreizhülse ist, die vorteilhaft hydraulisch betätigbar ist.

15. Werkzeuganordnung mit einem Werkzeuggrundkörper (22) und einem Wendeschneidwerkzeug nach Anspruch 14,
**dadurch gekennzeichnet, daß** das Wendeschneidwerkzeug in Achsrichtung mit seiner die Werkstückform erzeugenden Schneide (5, 6) an einem Anschlag (56) anliegt.

16. Werkzeuganordnung mit einem Werkzeuggrundkörper (22) und einem Wendeschneidwerkzeug nach einem der Ansprüche 3 bis 15,
**dadurch gekennzeichnet, daß** zwischen die Arme (2 bis 4, 11) Zähne (60) eines am Werkzeuggrundkörper (22) vorgesehenen Zahnrades/Zahnkranzes (61) eingreifen, daß vorzugsweise die Achse des Zahnrades/Zahnkranzes (61) mit der Achse des Werkzeuggrundkörpers (22) zusammenfällt, und daß vorteilhaft einer der Arme (2 bis 4, 11) mit seiner Flanke zur Lagebestimmung und Schnittkraftabstützung an einer Flanke des Zahnes (60) anliegt.

17. Werkzeuganordnung mit einem Werkzeuggrundkörper (22) und einem Wendeschneidwerkzeug nach einem der Ansprüche 1 bis 16,
**dadurch gekennzeichnet, daß** der Werkzeuggrundkörper (22) eine rotationssymmetrische Scheibenform aufweist.

18. Werkzeuganordnung mit einem Werkzeuggrundkörper (22) und einem Wendeschneidwerkzeug nach einem der Ansprüche 1 bis 17,
**dadurch gekennzeichnet, daß** der Werkzeuggrundkörper (22) mehrteilig aus einem scheibenförmigen Werkzeugträger und mehreren segmentförmigen Kassetten besteht.

## Claims

1. Tool with cutting-insert, fixable at a basic tool body (22) and comprising at least four cutting edges (5, 6) to which annex perimeter areas (7 to 9, 12, 17) which are situated at least at the connection to the cutting edges (5, 6) on a imaginary circle with a common diameter (D) around the axis (10) of the tool with cutting insert,
**characterized in that** the perimeter areas (7 to 9, 12, 17) are curved convex in the axial section.

2. Tool according to claim 1,
**characterized in that** the perimeter areas (7 to 9, 12, 17) are adapted in the cross-section to the shape of a profile (28), to be manufactured on a work piece (29), preferably a groove.

3. Tool according to claim 1 or 2,
**characterized in that** the perimeter areas (7 to 9, 12, 17) are provided on arms (2 to 4, 11), protruding radially from a base element (1).

4. Tool according to claim 3,
**characterized in that** the area between neighbouring arms (2 to 4, 11) form a chip reception space (34).

5. Tool according to claim 3 or 4,
**characterized in that** from the base member (1) protrudes at an angle to the arm (2 to 4, 11) a frustum-shaped appendix (35), which comprises preferably two contact surfaces (36, 37) with which the tool with cutting insert can be abutted at a counter area (38) of the basic tool body (22).

6. Tool according to claim 5,
**characterized in that** the contact surfaces (36, 37) are plane and advantageously placed normally to the end faces (18, 19) of the base element (1).

7. Tool according to claim 5 or 6,
**characterized in that** the arms (2 to 4, 11) project radially over the appendix (35).

8. Tool according to one of the claims 5 to 7,
**characterized in that** the appendix (35) is provided with cutting edges (63) which extend lengthwise along the appendix (35).

9. Tool arrangement with a basic tool body (22) and a cutting tool insert according to one of the claims 1 to 8,
**characterized in that** cutting tool insert is disposed inclined to a radial (58) of the basic tool body (22) at an angle (59) of between approximately 10° and 60°, preferably about 30°.

10. Tool arrangement with a basic tool body (22) and a cutting tool insert according to one of the claims 1 to 9,
**characterized in that** the basic tool body (22) comprises for the cutting tool insert at least one receiver (25, 42), which preferably has the shape of a profiled bore and into that project advantageously appendices (44, 45) at which the cutting tool insert is supported against the cutting force.

11. Tool arrangement with a basic tool body (22) and a cutting tool insert according to one of the claims 1 to 10,
**characterized in that** the cutting tool insert can be directly fixed to the basic tool body (22) with at least one screw (48) and that preferably the axis of symmetry of the bolt hole of the cutting tool insert is disposed offset with regard to the taphole within the basic tool body (22).

12. Tool arrangement with a basic tool body (22) and a cutting tool insert according to one of the claims 1 to 11,
**characterized in that** the cutting tool insert is held by at least one clamping element (21, 55) at the basic tool body (22).

13. Tool arrangement with a basic tool body (22) and a cutting tool insert according to claim 12,
**characterized in that** the clamping element (21) is wedge-shaped and engages transversely to the axis of the cutting tool insert.

14. Tool arrangement with a basic tool body (22) and a cutting tool insert according to claim 12,
**characterized in that** the clamping element (55) is a spreading bush which advantageously is hydraulically actuable.

15. Tool arrangement with a basic tool body (22) and a cutting tool insert according to claim 14,
**characterized in that** the cutting tool insert in axial direction abuts to a stop (56) with its cutting edge (5, 6) generating the shape of the workpiece.

16. Tool arrangement with a basic tool body (22) and a cutting tool insert according to one of the claims 3 to 15,
**characterized in that** between the arms (2 to 4, 11) mesh teeth (60) of a gear wheel/gear rim (61) provided at the basic tool body (22) and that preferably the axis of the gear wheel/gear rim (61) coincides with the axis of the basic tool body (22) and that advantageously one of the arms (2 to 4, 11) abuts with its flank at a flank of the teeth (60) for determination of position and support of cutting forces.

17. Tool arrangement with a basic tool body (22) and a cutting tool insert according to one of the claims 1 to 16,
**characterized in that** basic tool body (22) comprises a rotationally symmetric disk shape.

18. Tool arrangement with a basic tool body (22) and a cutting tool insert according to one of the claims 1 to 17,
**characterized in that** basic tool body (22) comprises many parts out of a disk-shaped tool carrier and a plurality of segment-shaped cassettes.

## Revendications

1. Outil avec plaquette de coupe pouvant être fixé à un corps d'embase d'outil (22) et comprenant au moins quatre lames (5, 6) auxquelles s'adjoignent des surfaces périphériques (7 à 9, 12, 17) lesquelles sont situées au moins à la connexion avec les lames (5, 6) sur un cercle imaginaire avec un diamètre commun (D) autour de l'axe (10) d'outil avec plaquette de coupe,
**caractérisé en ce que** les surfaces périphériques (7 à 9, 12, 17) sont courbées convexement dans la section axiale.

2. Outil selon revendication 1,
**caractérisé en ce que** les surfaces périfériques (7 à 9, 12, 17) sont adaptées dans la section transversale à la forme d'un profil (28), lequel peut être fabriqué à une pièce usinée (29), de préférence une entaille.

3. Outil selon revendication 1 ou 2,
**caractérisé en ce que** les surfaces périphériques (7 à 9, 12, 17) sont prévues à des bras (2 à 4, 11), saillant radialement d'un élément d'embase (1).

4. Outil selon revendication 3,
**caractérisé en ce que** la zone entre des bras voisins (2 à 4, 11) forme un logement de réception des copeaux (34).

5. Outil selon revendication 3 ou 4,
**caractérisé en ce que** de l'élément d'embase (1) fasse saillie transversalement au bras (2 à 4, 11) un appendice tronconique (35), comprenant de préférence deux surfaces de contact (36, 37) avec lesquelles l'outil avec plaquette de coupe peut être ajusté à une surface antagoniste (38) du corps d'embase d'outil (22).

6. Outil selon revendication 5,
**caractérisé en ce que** les surfaces de contact (36, 37) sont planes et situées de façon avantageuse perpendiculairement aux côtés frontaux (18, 19) de l'élément d'embase (1).

7. Outil selon revendication 5 ou 6,
**caractérisé en ce que** les bras (2 à 4, 11) font saillie radialement sur l'appendice (35).

8. Outil selon revendication 5 à 7,
**caractérisé en ce que** l'appendice (35) est muni de coupes (63) s'étendant dans le sens longitudinal de l'appendice (35).

9. Arrangement d'outil avec un corps d'embase d'outil (22) et un outil avec plaquette de coupe selon une des revendications 1 à 8,
**caractérisé en ce que** l'outil avec plaquette de coupe est disposé incliné vers un rayon (58) du corps d'embase d'outil (22) sur un angle (59) approximatif entre 10° et 60°, de préférence environ 30°.

10. Arrangement d'outil avec un corps d'embase d'outil (22) et un outil avec-plaquette de coupe selon une des revendications 1 à 9,
**caractérisé en ce que** le corps d'embase d'outil (22) comporte au moins un logement (25, 42) pour l'outil avec plaquette de coupe, comprenant de préférence la forme d'un perçage profilé et dans lequel font saillie des appendices (44, 45) sur lesquels l'outil avec plaquette de coupe s'appuie pour supporter l'effet de la force de coupe.

11. Arrangement d'outil avec un corps d'embase d'outil (22) et un outil avec plaquette de coupe selon une des revendications 1 à 10,
**caractérisé en ce que** l'outil avec plaquette de coupe peut être fixé par au moins une vis (48) au corps d'embase d'outil (22) et que de préférence l'axe de symétrie du perçage de vis de l'outil avec plaquette de coupe se trouve désaxé par rapport au perçage de filetage dans le corps d'embase d'outil (22).

12. Arrangement d'outil avec un corps d'embase d'outil (22) et un outil avec plaquette de coupe selon une des revendications 1 à 11,
**caractérisé en ce que** l'outil avec plaquette de coupe est tenu par au moins un elément de serrage (21, 55) au corps d'embase d'outil (22).

13. Arrangement d'outil avec un corps d'embase d'outil (22) et un outil avec plaquette de coupe selon revendication 12,
**caractérisé en ce que** l'elément de serrage (21) est agencé de façon cunéiforme s'exergant transversalement sur l'axe dans l'outil avec plaquette de coupe.

14. Arrangement d'outil avec un corps d'embase d'outil (22) et un outil avec plaquette de coupe selon revendication 12,
**caractérisé en ce que** l'elément de serrage (55) est une douille d'expansion pouvant être actionnée avantageusement de manière hydraulique.

15. Arrangement d'outil avec un corps d'embase d'outil (22) et un outil avec plaquette de coupe selon revendication 14,
**caractérisé en ce que** l'outil avec plaquette de coupe en direction d'axe soit bien en contact avec sa coupe (5, 6) générant la forme de la pièce à usiner dans une butée (56).

16. Arrangement d'outil avec un corps d'embase d'outil (22) et un outil avec plaquette de coupe selon une des revendications 3 à 15,
**caractérisé en ce que** entre les bras (2 à 4, 11) s'engrènent les dents (60) d'une roue dentée/couronne dentée (61) prévue dans le corps d'embase d'outil (22) et que de préférence l'axe de la roue dentée/couronne dentée (61) converge avec l'axe du corps d'embase d'outil (22) et qu'avantageusement l'un des bras (2 à 4, 11) soit bien en contact avec son flanc pour déterminer la position et supporter la force de coupe dans un flanc de la roue dentée (60).

17. Arrangement d'outil avec un corps d'embase d'outil (22) et un outil avec plaquette de coupe selon une des revendications 1 à 16,
**caractérisé en ce que** le corps d'embase d'outil (22) comporte à la forme d'un disque symétrique rotatif.

18. Arrangement d'outil avec un corps d'embase d'outil (22) et un outil avec plaquette de coupe selon une des revendications 1 à 17,
**caractérisé en ce que** le corps d'embase d'outil (22) se compose de plusieurs parties d'un porte-outil en forme de disque et de plusieurs cassettes segmentaires.
